# EUROPÄISCHE PATENTSCHRIFT

(11) **EP 2 882 637 B1**
(45) Veröffentlichungstag und Bekanntmachung des Hinweises auf die Patenterteilung: **22.08.2018**
(21) Anmeldenummer: 13720768.4
(22) Anmeldetag: 20.04.2013
(51) Int. Cl.: B62J 1/00, B62K 3/10, B62K 15/00, B62K 19/36

(54) **FAHRRAD**
BICYCLE
BICYCLETTE

(30) Priorität: 08.08.2012 DE 102012107253
(43) Veröffentlichungstag der Anmeldung: 17.06.2015
(73) Patentinhaber: Bettin, Karsten, 30173 Hannover (DE)
(72) Erfinder: Bettin, Karsten, 30173 Hannover (DE)
(86) Internationale Anmeldenummer: PCT/DE2013/100146
(87) Internationale Veröffentlichungsnummer: WO 2014/023291

(56) Entgegenhaltungen:
- EP-A1- 0 467 541
- EP-A2- 1 736 402
- EP-A2- 1 995 165
- CN-Y- 2 182 139
- CN-Y- 200 992 274
- DE-U1- 20 215 136
- JP-A- H09 109 960
- JP-A- 2009 190 563
- US-A1- 2012 043 148

## Beschreibung

### Technisches Gebiet

Die Erfindung betrifft ein Fahrrad gemäß dem Oberbegriff des Anspruchs 1.

### Stand der Technik

Alle dem Erfinder bekannten Fahrräder weisen beim Fahren entweder einen fest mit dem Fahrradrahmen verbundenen Fahrradsitz auf oder der Fahrradrahmen beziehungsweise die Sattelstütze dieser Fahrräder ist so ausgestaltet, dass der Fahrradsattel höchstens in der und damit ohne Relativbewegung zur Bezugsmittelebene des Fahrrades beweglich ist, oder die Sattelstütze und der Sattel des Fahrrades sind drehbar mit dem Sitzrohr verbunden. Der Nachteil dieser Anordnungen ist entweder, dass der Fahrradfahrer beim Fahren im Sitzen eine wesentlich andere, weil nach vorn gebeugte Haltung einnimmt als beim aufrechten Fahren im Stehen. Oder der Nachteil besteht darin, dass das aufrechte Fahren im Stehen gar nicht möglich ist, weil der Fahrradsattel das Fahren im Stehen behindert. Ein Beispiel für den letztgenannten Nachteil findet sich in US 1 381 281 A.

Bei Verwendung kleinerer Laufräder als 16 Zoll oder 20 Zoll für Fahrräder sind zusätzlich die die Fahreigenschaften des Fahrrades betreffenden Nachteile bei der Beurteilung des Standes der Technik zu berücksichtigen:
- Kleine Vorderräder reagieren schneller auf Lenkbewegungen und tendieren schon bei kleineren Geschwindigkeiten und auf leicht unebenen Bodenbelägen zum Wackeln.
- Beim Überfahren von Hindernissen (Gegenstände, Löcher, Erhebungen auf der Fahrbahn) mit kleinen Laufrädern kann die Lenkbewegung empfindlich gestört werden.
- Aufgrund des deutlich verminderten Kreiseleffektes bei Fahrrädern mit kleinen Laufrädern ist das Fahren im Stehen darüber hinaus grundsätzlich instabiler als bei Fahrrädern mit großen Laufrädern.

Fahrräder, die im Stehen gefahren werden, haben den Nachteil, dass gar keine Sitzvorrichtung vorgesehen ist. Dadurch entsteht der Nachteil, dass der Fahrradfahrer sich nur an zwei Stellen am Fahrrad abstützt und zwar mit den Füßen auf den Pedalen und mit den Händen am Lenker. Da der Fahrradfahrer sein gesamtes Gewicht bei diesen Fahrrädern immer selbst tragen muss und zum Vortrieb zudem sein gesamtes Gewicht mit jeder Kurbelumdrehung nach oben heben muss, empfindet der Fahrradfahrer das Fahren im Stehen als anstrengender als das Fahren im Sitzen. Rollt der Fahrradfahrer nur und steht er mit durchgestrecktem Bein auf dem unteren Pedal, während das andere Bein angewinkelt auf dem oberen Pedal steht, muss der Fahrer die durch das Gewichtsmoment ausgelöste Neigung des Fahrrades zur Seite des durchgestreckten Beines durch eine auf die Lenkerseite des angewinkelten Beines ausgeübte Haltekraft ausgleichen. Werden kleine Vorderräder eingesetzt, ist entsprechend obiger Ausführungen insbesondere bei schnellem Fahren und/oder beim Überfahren von Hindernissen der Geradeauslauf empfindlich gestört. Beispiele finden sich in: JP 2010 260 457 A, FR 2 876 657 A1, WO 2006/ 111 590 A1, KR 10 0 768 964 B1, US 2004 / 0 004 341 A1, den Fahrrädern microslider und dreamslide der Firma dreamslide, S.A, Bures-sur-Yvette, Frankreich und den Fahrrädern MCS16" und MCS across the city der Firma Maderna Cycle Systems, Wien, Österreich.

Aus EP 1 995 165 A2 ist ein Fahrrad bekannt, dass im Stehen gefahren wird und einen Fahrradsitz aufweist, der drehbeweglich mit dem Steuerkopfrohr verbunden ist, wobei die Hauptfunktion des Fahrradsitzes darin besteht, das Fahrrad zu lenken. Der Fahrradsitz ist damit der Lenker des Fahrrades. Nachteilig daran ist, dass der Fahrer zum Fahren einer Kurve damit seine Hüfte zur Seite bewegen muss oder das Fahrrad als Ganzes zur Seite neigen muss. Das Fahren im Stehen ist damit anstrengend, weil der Fahrer zusätzliche Spannungen zwischen der Taille beziehungsweise der Hüfte und dem Fahrradsitz erzeugen muss, um ein Auslenken zu erzeugen. Die übliche Funktion eines Fahrradsitzes als ein das Gewicht des Fahrers abstützendes Element ist damit nicht gegeben.

Aus EP 1 736 402 A2 ist ein Fahrrad bekannt, das mit Hilfe eines Sattels und damit in sitzender Position gelenkt. Ähnlich zu EP 1 995 165 A2 ist nachteilig, dass der Sattel zum Einlenken in eine Kurve vom Fahrer mit dessen Hüfte zu einer der beiden Seiten der Bezugsmittelebene bewegt werden muss und darüber hinaus in die der Kurve entgegengesetzte Richtung bewegt werden muss. Zusätzlich besteht der Nachteil, dass das Fahrrad beim Fahren im Stehen nicht gelenkt werden kann, da der Fahrer im Stehen keinen Kontakt zum Sattel hat.

Aus US 2012/043148 A1, auf dem der Oberbegriff von Anspruch 1 basiert, ist ein faltbares Fahrrad bekannt, enthaltend einen Fahrradsitz des Fahrers, der über eine Drehachse drehbeweglich mit dem Fahrrad verbunden ist, wobei die Drehachse des Fahrradsitzes so angeordnet ist, dass eine Drehbewegung nach links und nach rechts möglich ist. Diese Funktion dient dem Zusammenklappen, der Fahrradsitz wird dabei etwas zur Seite bewegt. Im ausgeklappten Zustand wird der drehbewegliche Fahrradsitz mittig fixiert, um dem Fahrer eine stabile Sitzposition zu ermöglichen, wie sie bei Fahrrädern üblich ist, die im Sitzen gefahren werden und damit die vorstehend genannten Nachteile aufweisen.

### Darstellung der Erfindung

Demgegenüber besteht die Aufgabe der Erfindung darin, ein Fahrrad zu entwickeln, das die oben genannten Nachteile der Fahrräder, die im Stehen gefahren werden, mindert und das eine angenehme Unterstützung für das aufrechte Fahrradfahren bietet.

Zur Lösung dieser Aufgabe dienen die Merkmale des Anspruchs 1.

Darüber hinaus weist die Erfindung weitere vorteilhafte aus den Unteransprüchen hervorgehende Ausgestaltungen auf. Die Erfindung umfasst Fahrräder, die so zusammenklappbar sind, dass für das gesamte Fahrrad ein geringes Faltmaß erzielt werden kann.

Der in der nachstehenden Beschreibung und in den Patentansprüchen verwendete Begriff des Fahrradsitzes umfasst alle denkbaren Formen von Abstützkomponenten, an denen sich der Fahrer durch Kontakt zu seinem Gesäß, also seiner Regio glutealis, und/oder durch Kontakt zu seiner Regio sacralis zum Fahrrad hin abstützt.

Der in der nachstehenden Beschreibung und in den Patentansprüchen verwendete Begriff der Sitzfläche umfasst diejenigen Flächen des Fahrradsitzes, die beim Fahren den Kontakt zu dem Gesäß und/oder zu der Regio sacralis des Fahrers haben.

Der in der nachstehenden Beschreibung und in den Patentansprüchen verwendete Begriff der Fahrradsitzanordnung definiert denjenigen Teil des Fahrrades, der den Fahrradsitz aufweist.

### Kurze Beschreibung der Zeichnungen

Fig. 1 zeigt die Seitenansicht einer bevorzugten Ausführungsform des Fahrrades mit einer Fahrradsitzanordnung.
Fig. 2 zeigt das Fahrrad mit der Fahrradsitzanordnung aus Fig. 1 in der Ansicht von hinten.
Fig. 3 zeigt das Fahrrad mit der Fahrradsitzanordnung aus Fig. 1 in der Ansicht von oben.
Fig. 4 zeigt eine zweite bevorzugte Ausführungsform des Fahrrades mit einer Fahrradsitzanordnung mit exzentrischer Drehachse.
Fig. 5 zeigt eine Ansicht einer besonders kompakten, in DE 10 2011 122 836 näher dargestellten Ausführungsform des Fahrrades, an das eine weiter Ausführungsform der Fahrradsitzanordnung montiert ist.
Fig. 6 zeigt eine Ansicht des Fahrrades aus Fig. 5 von hinten.
Fig. 7 und Fig. 8 zeigen zwei Ansichten des Fahrrades aus Fig. 5 im zusammengeklappten Zustand.
Fig. 9 zeigt die Seitenansicht einer weiteren Ausführungsform des Fahrrades mit einer zum Steuerkopfrohr gelagerten Fahrradsitzanordnung.
Fig. 10 zeigt die Seitenansicht des Fahrrades aus Fig. 9 im zusammengeklappten Zustand.
Fig. 11 zeigt die Ansicht einer weiteren Ausführungsform des Fahrrades mit einer zum Fahrradrahmen gelagerten Fahrradsitzanordnung.
Fig. 12 zeigt den Sattel der Fahrradsitzanordnung aus Fig. 11.

### Bester Weg zur Ausführung der Erfindung und bevorzugte Ausführungsformen

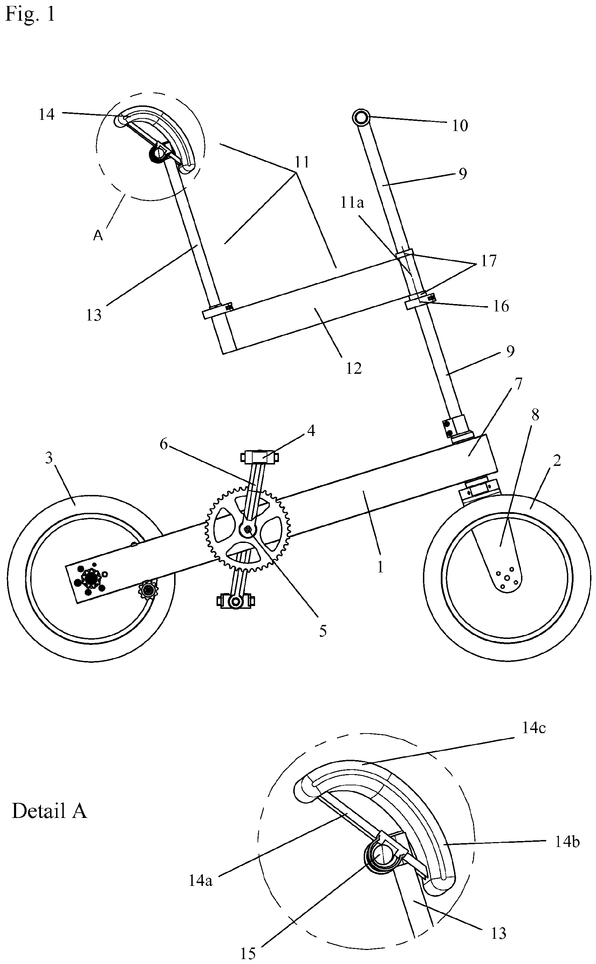

Fig. 1 zeigt eine Seitenansicht einer bevorzugten Ausführungsform des Fahrrades.

Dargestellt ist ein Fahrrad mit einem Fahrradrah nen 1, einem Vorderrad 2 und einem Hinterrad 3. Das Hinterrad 3 wird mittels Pedalen 4 durch einen Fahrradantrieb, vorliegend durch ein Kettengetriebe mit einem Tretlager 5, das mit Tretkurbeln 6 verbunden ist, angetrieben. Auch andere Fahrradantriebe mit Pedalen, bei denen sich die Füße des Fahrers wechselseitig auf- und abwärts bewegen, sind von der Erfindung umfasst.

Der Fahrradrahmen 1 weist ein Steuerkopfrohr 7 auf. Im Steuerkopfrohr 7 ist der Gabelschaft einer Vorderradgabel 8 drehbar gelagert. Oberhalb des Steuerkopfrohres 7 ist der Gabelschaft mit einer Lenksäule 9 verbunden. Die Lenksäule 9 ist fest mit dem Lenker 10 verbunden.

Der Fahrer fährt das Fahrrad aufrecht stehend. Die aufrechte Fahrweise ermöglicht dem Fahrer, sein Gewicht für den Vortrieb einzusetzen und eine für den Rücken entspannende Fahrhaltung einzunehmen. Der Lenker 10 und die Lenksäule 9 sind in Fahrtrichtung gesehen vor dem Fahrer angeordnet. Der Lenker 10 ist in einer solchen Höhe angeordnet, dass die Oberschenkel des Fahrers unterhalb des Lenkers 10 ausreichend Platz haben.

Das Fahrrad weist eine Fahrradsitzanordnung 11, enthaltend ein Rahmenteil 12, eine Sattelstütze 13 und einen Fahrradsitz 14, auf. Nach einem besonderen Merkmal der Erfindung ist die Fahrradsitzanordnung 11 über eine Drehachse 11a drehbeweglich zum Fahrrad mit dem Fahrrad verbunden, wobei die Drehachse 11a der Fahrradsitzanordnung 11 in Fahrtrichtung gesehen vor der Sitzfläche des Fahrradsitzes 14 angeordnet ist und wobei die Drehbewegung der Fahrradsitzanordnung 11 zu beiden Seiten der Bezugsmittelebene des Fahrrades hin möglich ist und unabhängig von der Lenkbewegung des Fahrrades ist.

Im Falle der Fig. 1 ist die Drehachse 11a nach einem weiteren Merkmal der Erfindung der Fahrradsitzanordnung 11 auch vor der orthogonal zur Grundebene stehenden, durch die Tretlagerachse verlaufenden Linie angeordnet. Im Falle der Fig. 1 ist die Fahrradsitzanordnung 11 nach einem weiteren Merkmal der Erfindung zur Lenksäule 9 drehbeweglich mit der Lenksäule 9 verbunden. Dabei erfolgt die drehbewegliche Verbindung als Drehachse 11a zwischen Lenksäule 9 und Rahmenteil 12 am vorderen Ende des Rahmenteils 12 in Fahrtrichtung gesehen vor dem Fahrer. Nach einem Merkmal der Erfindung ist der Fahrradsitz 14 hinter der Lotrechten der Tretlagerachse angeordnet.

Nach einem Merkmal der Erfindung kann sowohl die horizontale als auch die vertikale Position des Fahrradsitzes 14 verändert werden. Der Fahrradsitz 14 weist Streben 14a auf, die mit einem handelsüblichen Sattelkloben 15 verbunden sind, womit die horizontale Position des Fahrradsitzes 14 verstellt werden kann. Dabei ist der Fahrradsitz 14 nach einem Merkmal der Erfindung hinter der orthogonal zur Grundebene stehenden und durch die Tretlagerachse verlaufenden Linie angeordnet.

Das Rahmenteil 12 ist in einer Höhe angeordnet, die für Oberrohre von Erwachsenenfahrrädern üblich ist. Der Fahrer kann damit ohne Berührung des Rahmenteils 12 zwischen dem Lenker 10 und dem Fahrradsitz 14 auf dem Boden stehen.

Im Folgenden sollen die wesentlichen Erfindungsgedanken und die besonderen Vorteile des Fahrrades mit der drehbeweglichen Fahrradsitzanordnung 11 erläutert werden:
Durch die zur Seite gegebene Drehbeweglichkeit der Fahrradsitzanordnung 11 resultiert der besondere Vorteil, dass die Fahrradsitzanordnung 11 und damit das Rahmenteil 12 und der Fahrradsitz 14 dem nach unten tretenden Bein und der mit diesem Bein verbundenen Hüftseite des Fahrers durch eine Drehbewegung zur Seite ausweichen. Damit entsteht Platz für das zum unteren Pedalpunkt durchgestreckte Bein des Fahrers. Dies ermöglicht dem Fahrer eine aufrechte Fahrhaltung, ohne dass der Fahrradsitz 14 das aufrechte Fahren behindert. Da sich auf der anderen Seite der Fahrradsitz 14 zu der Hüftseite des nicht durchgestreckten Beines hinbewegt, verdrängt der Fahrradsitz 14 die Hüftseite des nicht durchgestreckten Beines nach vorn und nach oben, wodurch sich die Hüftseite des nicht durchgestreckten Beines hebt und den Fahrer beim aufrechten Fahren dabei unterstützt, sein Gewicht auf das obere Pedal 4 zu heben. Gleichzeitig kann sich der Fahrer an dem Fahrradsitz 14 nach hinten und nach unten abstützen und muss beim aufrechten Fahren nicht sein gesamtes Gewicht tragen.

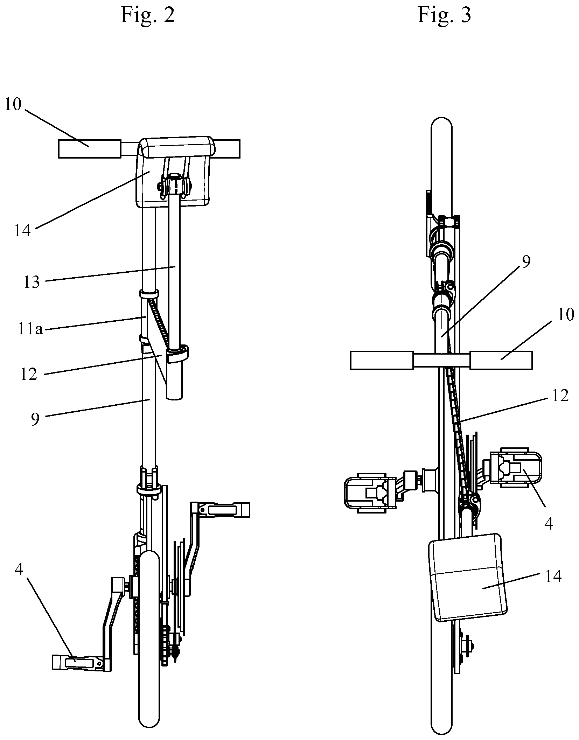

Fig. 2 und 3 zeigen in der Ansicht von hinten und von oben das Fahrrad aus Fig. 1 mit der zur Seite geschwenkten Fahrradsitzanordnung 11.

Rollt der Fahrradfahrer nur und steht er mit durchgestrecktem Bein auf dem unteren Pedal 4, während das andere Bein angewinkelt auf dem oberen Pedal steht, wird die durch das Gewichtsmoment ausgelöste Neigung des Fahrrades zur Seite des durchgestreckten Beines dadurch ausgeglichen, dass die Hüftseite des nicht durchgestreckten Beines sich an dem Fahrradsitz 14 abstützt. Ein Ausgleich durch eine auf die Lenkerseite des angewinkelten Beines ausgeübte Haltekraft der Arme ist kaum noch erforderlich.

Aufgrund der drehbeweglichen Fahrradsitzanordnung 11 muss der Fahrer beim Treten die durch das Abstützen auf den Fahrradsitz 14 nach hinten ausgeübte Kraft dadurch ausgleichen, dass er mit den Armen und Händen gleichzeitig nach vorn gegen die Lenkerseite des durchgestreckten Beines drückt, da in der aufrechten Fahrweise von den Füßen keine oder nur eine geringe nach vorn gerichtete Kraft auf das Pedal ausgeübt wird. Daraus resultiert der Effekt, dass zwischen dem Lenker 10 beziehungsweise der Lenksäule 9 und dem Fahrradsitz 14 über das Rahmenteil 12 eine Spannung aufgebaut wird, wodurch die Lenkbewegungen beim Lenken kleiner Vorderräder stabilisiert werden und das Wackeln der kleinen Vorderräder vermindert wird. Ebenso führt die auf den Lenker 10 nach vorn ausgeübte Kraft zu einer Verminderung beziehungsweise Vermeidung der Abhebetendenz des Vorderrades 2, die ja durch die auf den Fahrradsitz 14 nach hinten ausgeübte Kraft gegeben ist. Aus diesem Grund kann die Fahrradsitzanordnung 11 auch für Fahrräder mit kurzen Hinterbaulängen eingesetzt werden.

Durch die Tretbewegung der Beine bewegt sich der Fahrradsitz 14 abwechselnd auf die eine, dann auf die andere Seite und der Fahrer empfindet im Ergebnis durch die oben benannten Effekte trotz der aufrechten Fahrweise ein angenehmes und abgestütztes Fahrgefühl.

Zur Verwirklichung einer optimalen Abstützung beträgt nach einem weiteren Merkmal der Erfindung der horizontale Anteil des Abstandes zwischen der Sitzfläche des Fahrradsitzes 14 und der Drehachse 11a der Fahrradsitzanordnung 11 wenigstens 30 cm und bis zu 60 cm. Der Abstand zwischen der Drehachse 11a der Fahrradsitzanordnung 11 und der Sitzfläches des Fahrradsitzes 14 sollte nach einem weiteren Merkmal der Erfindung wenigstens 10 cm betragen, um überhaupt einen Abstützeffekt zu erreichen.

Je nach gewählter Position des Fahrradsitzes 14 kann für den Fahrer das Gefühl im Stehen zu fahren oder das Gefühl im Sitzen zu fahren überwiegen. Wird der Fahrradsitz 14 eher höher und eher weiter vorn positioniert, überwiegt das Empfinden, im Stehen zu fahren. Wird der Fahrradsitz 14 eher niedriger und weiter hinten positioniert, überwiegt das Empfinden im Sitzen zu fahren.

Nach einem weiteren Merkmal der Erfindung kann der Fahrer damit eine aufrechte Fahrposition beibehalten und durch den Umfang der Abstützung entweder eine mehr sitzende oder eine mehr stehende Fahrweise einstellen beziehungsweise eine zum Fahrradsitz 14 mehr oder weniger abgestützte aufrechte Fahrweise einnehmen.

Nach einem Merkmal der Erfindung weist der Fahrradsitz 14 zu diesem Zweck eine nach außen gewölbte Sitzfläche auf, wobei die für die stehende Fahrweise zur Abstützung des Fahrers vorgesehene untere Sitzfläche 14b weniger gekrümmt ist als die für die sitzende Fahrweise vorgesehene obere Sitzfläche 14c aus Fig. 1.

Dadurch können Anforderungen, die aus der Geometrie und der Übersetzung des Fahrrades resultieren, bei der Einstellung der Fahrradsitzposition berücksichtigt werden. Fahrräder mit einer besonders kurzen Hinterbaulänge von beispielsweise weniger als 25 cm sollten mehr stehend gefahren werden, da ansonsten die nach hinten auf den Fahrradsitz 14 wirkende Kraft bei stärkerem Antritt ein Abheben des Vorderrades 2 auslöst. Entsprechendes gilt für Fahrräder, die einen größeren horizontalen Abstand zwischen der Tretlagerachse und dem Lenker von beispielsweise mehr als 30 cm aufweisen, weil die Zugkraft der Arme auf den Lenker bei stärkerem Antritt mehr nach hinten wirkt als bei kürzeren Abständen und somit das Vorderrad 2 bei stärkerem Antritt abheben könnte. Entsprechendes gilt auch für die Übersetzung des Fahrradantriebes. Bei geringen Entfaltungen des Fahrradantriebes, in diesem Ausführungsbeispiel also die Wegstrecke pro Kurbelumdrehung, kann vom Fahrer eine mehr stehende Fahrweise bevorzugt werden, um ein Abheben des Vorderrades 2 bei stärkerem Antritt zu vermeiden.

Der Fahrer kann die Abstützung zum Fahrradsitz 14 noch erhöhen, indem er mit seinen Armen und Händen einen zusätzlichen nach vorn gerichteten Druck auf den Lenker 10 ausübt. Dies führt zu einer Verspannung des Körpers zwischen dem Lenker 10 und dem Fahrradsitz 14, womit der Fahrer auch sehr schnelle Tretbewegungen ausführen kann, die ansonsten durch die schnell wechselnde Gewichtsverlagerung auf die Pedale 4 die Kontrolle über das Fahrrad gefährden würden. Zur Verwirklichung dieser Funktion beträgt daher nach einem weiteren Merkmal der Erfindung der horizontale Anteil des Abstandes zwischen der Sitzfläche des Fahrradsitzes 14 und dem Lenker 10 wenigstens 30 cm und bis zu 60 cm.

Da sich der Fahrradsitz 14 immer seitlich zu der abzustützenden Hüftseite hinbewegt, kann der Fahrradsitz 14 sehr schmal ausgeführt werden.

Nach einem weiteren Merkmal der Erfindung entsteht durch den gewichts- und/oder durch den kraftinduzierten Druck auf den Fahrradsitz 14 insbesondere bei der mehr sitzenden Fahrweise ein in Fahrtrichtung gesehen nach hinten wirkendes Biegemoment auf die Lenksäule 9. Wird die Lenksäule 9 in entsprechender Steifigkeit und Elastizität ausgeführt, führt das Biegemoment zu einer geringen elastischen Verformung der Lenksäule 9 nach hinten. Der besondere Vorteil dieser Verformung liegt darin, dass durch die Verformung die Lenkbewegung erschwert wird, weil beim Drehen der Lenksäule 9 um ihre eigene Achse von dem Fahrer oder von Unebenheiten des Bodenbelages zusätzlich die Verformung überwunden werden muss, damit sich die Lenksäule 9 dreht. Dadurch werden die Lenkbewegungen beim Lenken kleiner Vorderräder stabilisiert und das Wackeln der kleinen Vorderräder vermindert. Dabei gilt: Je weiter oben das Rahmenteil 12 und damit die Fanrradsitzanordnung 11 drehbeweglich mit der Lenksäule 9 verbunden ist, desto höher ist die erreichte Verformung und desto stabilisierender der Effekt.

Die Fahrradsitzanordnung 11 kann durch eine Vielzahl von der Erfindung umfasster Ausführungsformen drehbeweglich mit beziehungsweise drehbeweglich zu der Lenksäule 9 verbunden werden. In Fig. 1 beispielsweise positioniert eine Klemmverbindung 16 die um die Lenksäule 9 drehbewegliche Fahrradsitzanordnung 11 in der Höhe an der Lenksäule 9. Dabei kann die Fahrradsitzanordnung 11 direkt auf der Klemmverbindung 16 aufsitzen oder durch eine geeignete Lageranordnung 17, beispielsweise durch ein das Rahmenteil 12 oben und unten zur Lenksäule 9 lagerndes Steuerlager, zur Lenksäule 9 und zur Klemmverbindung 16 gelagert werden.

Auch könnte die Lenksäule 9 lediglich einen Absatz aufweisen, auf dem die Fahrradsitzanordnung 11 drehbeweglich aufsitzt

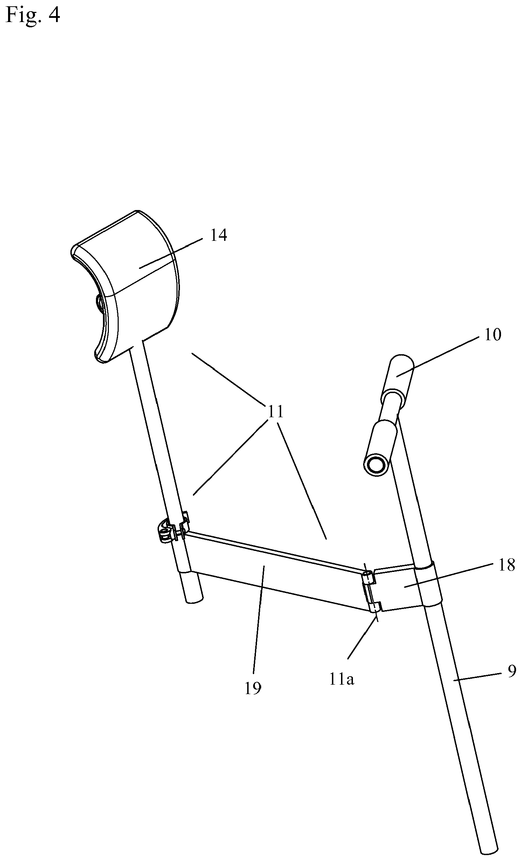

Fig. 4 zeigt eine zweite Ausführungsform des Fahrrades, wobei die Drehachse 11a der Fahrradsitzanordnung 11 nach einem besonderen Merkmal der Erfindung hinter der Drehachse der Lenksäule 9 angeordnet ist. Die Lenksäule 9 ist zunächst mit einem nach hinten weisenden Scharnier 18 fest verbunden oder weist dieses auf. Die Fahrradsitzanordnung 11, die wiederum ein Rahmenteil 19 und den Fahrradsitz 14 enthält, ist mit dem Scharnier 18 über die Drehachse 11a drehbeweglich verbunden. Diese Anordnung hat den besonderen Vorteil, dass insbesondere bei längeren Abständen zwischen der Lenksäule 9 und dem Fahrradsitz 14 die Drehachse der Fahrradsitzanordnung 11 in Fahrtrichtung gesehen nach hinten verschoben wird, wodurch einerseits der Schwenkwinkel und damit der Platz für das durchgestreckte Bein und die Unterstützung für die Hüftseite des nicht durchgestreckten Beines vergrößert wird.

Andererseits wird die Lenkbewegung bei einer Kurvenfahrt etwas erschwert, weil die Drehachse 11a gegen die in die Kurve geneigte Gewichtskraft des Fahrers gedreht werden muss.

Dies wiederum fördert den Geradeauslauf bei Fahrrädern mit kleinen Laufrädern und vermindert die Tendenz der kleinen Laufräder zum Wackeln.

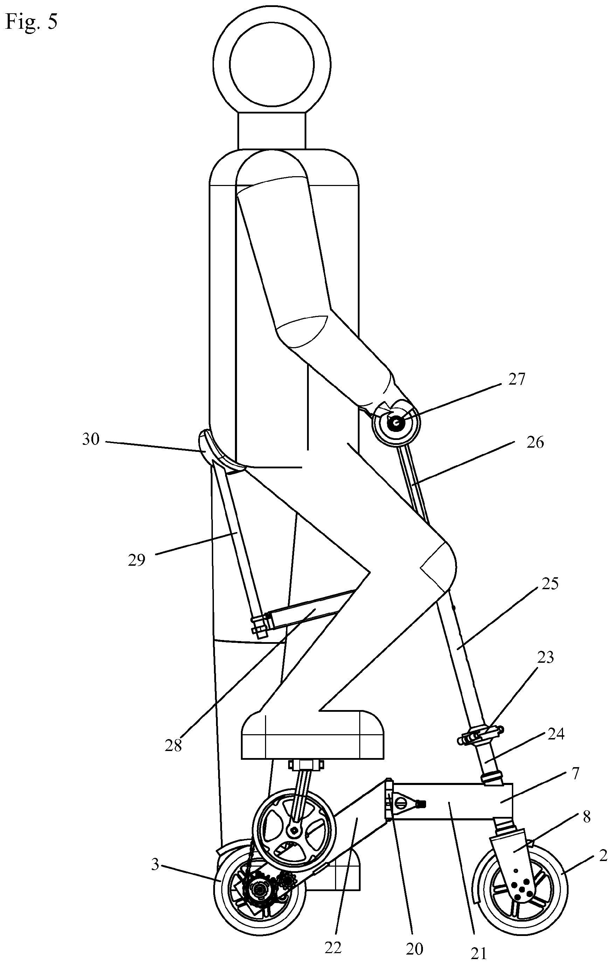

Fig. 5 zeigt eine Ansicht eines besonders kompakten, in DE 10 2011 122 836 näher dargestellten Fahrrades, das von einem 2,0 m großen Menschen gefahren wird und an das eine Fahrradsitzanordnung drehbeweglich zur Lenksäule montiert ist.

Zur Vermeidung von Wiederholungen wird betreffend das Fahrrad ohne die Fahrradsitzanordnung auf die Druckschrift DE 10 2011 122 836 verwiesen, die hiermit zur Vermeidung von Wiederholungen zum Gegenstand der vorliegenden Offenbarung gemacht wird.

Ein Klappgelenk 20 verbindet ein vorderes Rahmenteil 21 mit einem hinteren Rahmenteil 22 des Fahrrades.

Ein weiteres Klappgelenk 23 verbindet ein unteres Scharnier 24, das mit dem Gabelschaft über eine Klemmverbindung verbunden ist, mit einem oberen Scharnier, das zu einer unteren Lenksäule 25 ausgebildet ist, wobei eine obere Lenksäule 26 linear verschieblich in der unteren Lenksäule 25 angeordnet ist. Die obere Lenksäule 26 ist mit einem Lenker 27 verbunden.

Die Fahrradsitzanordnung enthält ein Rahmenteil 28, eine Sattelstütze 29 und einen Fahrradsitz 30. Die gesamte Fahrradsitzanordnung ist über das Rahmenteil 28 an dessen vorderem Ende über die Drehachse 11a wiederum drehbeweglich mit dem Fahrrad verbunden.

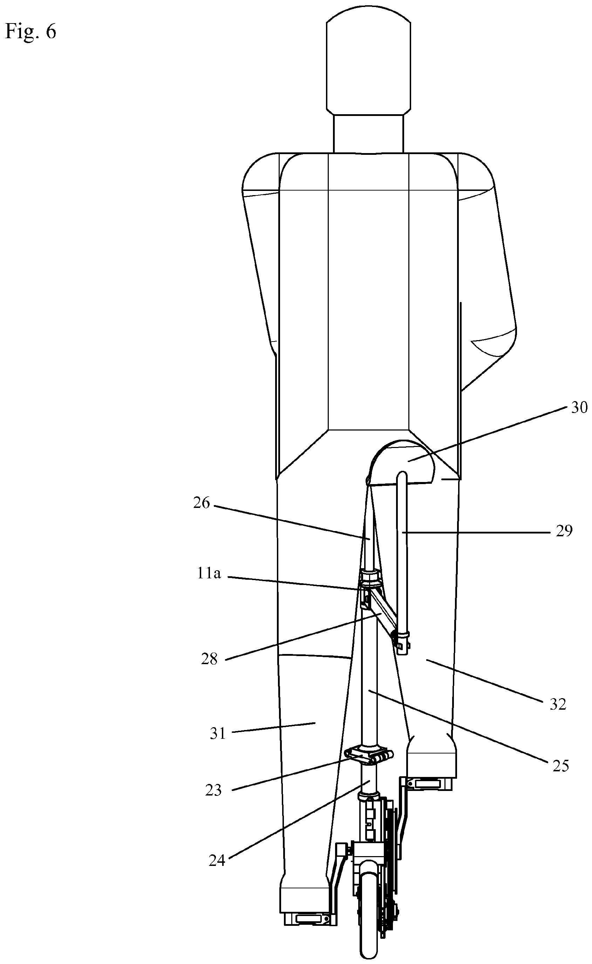

Fig. 6 zeigt eine Ansicht des Fahrrades aus Fig. 5 von hinten. In dieser Ansicht ist deutlich zu erkennen, dass die Fahrradsitzanordnung dem nach unten tretenden Bein 31 des Fahrers zur Seite des angewinkelten Beines 32 des Fahrers ausweicht, womit der Fahrradsitz 30 die Hüftseite des angewinkelten Beines 32 abstützt.

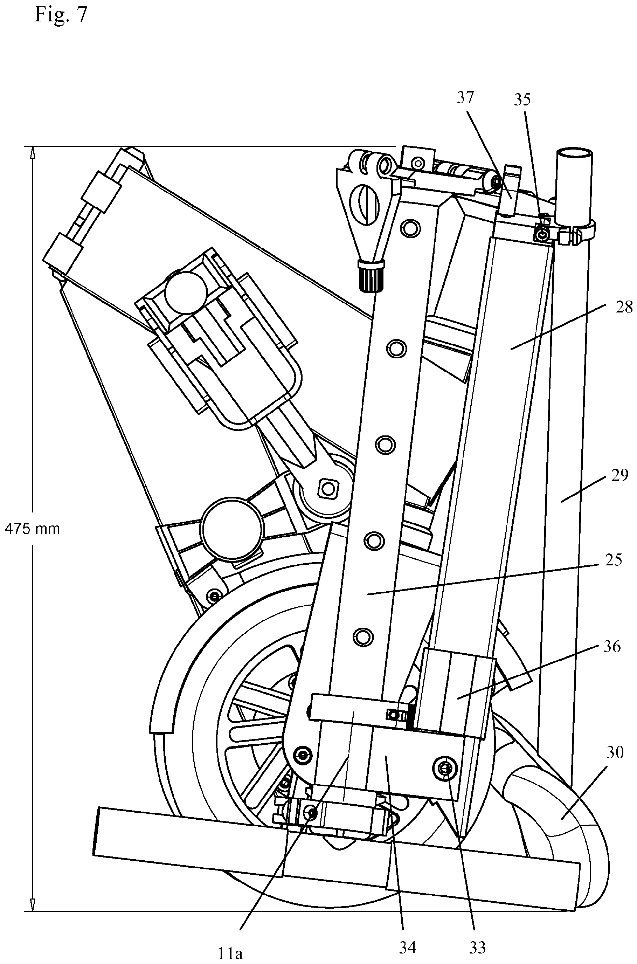

Fig. 7 zeigt die Seitenansicht des Fahrrades aus Fig. 5 im zusammengeklappten Zustand. Das Rahmenteil 28 ist über eine Achse 33 mit einer über die Drehachse 11a der Fahrradsitzanordnung drehbeweglich zur Lenksäule 25 gelagerten Halterung 34 der Fahrradsitzanordnung drehbar verbunden. Rahmenteil 28 und Sattelstütze 29 sind über eine weitere Achse 35 drehbar verbunden. Nach einem besonderen Merkmal der Erfindung sind im zusammengeklappten Zustand des Fahrrades das Rahmenteil 28 und die Sattelstütze 29 mit Hilfe der Achsen 33 und 35 in etwa längs der unteren Lenksäule 25 und längs der größten Länge des Faltmaßes des zusammengeklappten Fahrrades eingeklappt. Die größte Länge des Faltmaßes des Fahrrades aus Fig. 5 beträgt damit nach einem besonderen Merkmal der Erfindung lediglich 47,5 cm oder weniger als 55 cm.

Ergänzend sind in Fig. 7 mögliche Beispiele für die Fixierung des Rahmenteiles 28 und der Sattelstütze 29 im ausgeklappten Zustand dargestellt. Während eine Schiebehülse 36 im ausgeklappten Zustand von dem Rahmenteil 28 auf die Halterung 34 geschoben wird, wird die Sattelstütze 29 im ausgeklappten Zustand durch eine Klemme 37 in ihrer Position gehalten.

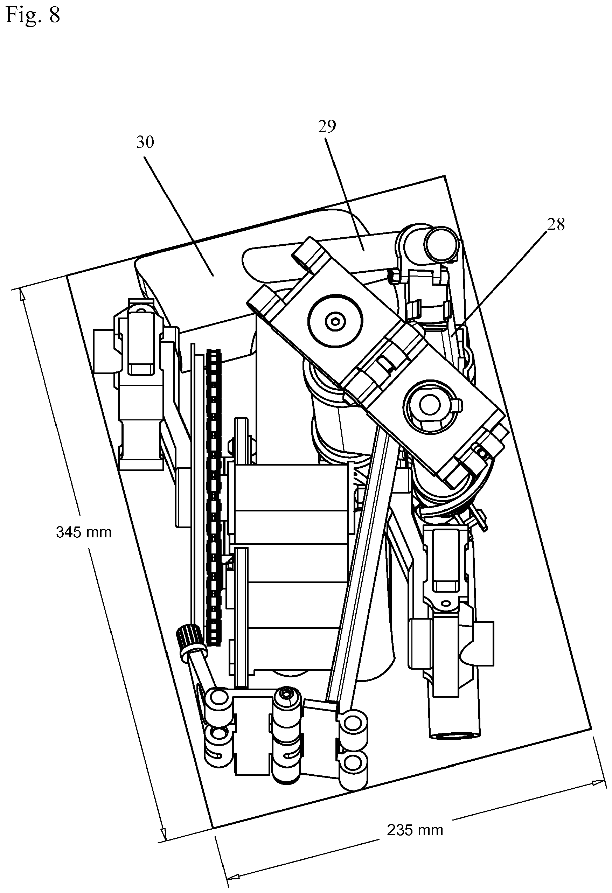

Fig. 8 zeigt die Ansicht des Fahrrades aus Fig. 5 im zusammengeklappten Zustand von oben. Mit einer Faltmaßbreite von 34,5 cm und einer Faltmaßtiefe von 23,5 cm beträgt die Summe der Länge, der Breite und der Tiefe des Faltmaßes nach einem besonderen Merkmal der Erfindung höchstens 115 cm und erfüllt damit hinsichtlich der Maße die Bordgepäckbestimmungen zahlreicher Fluggesellschaften.

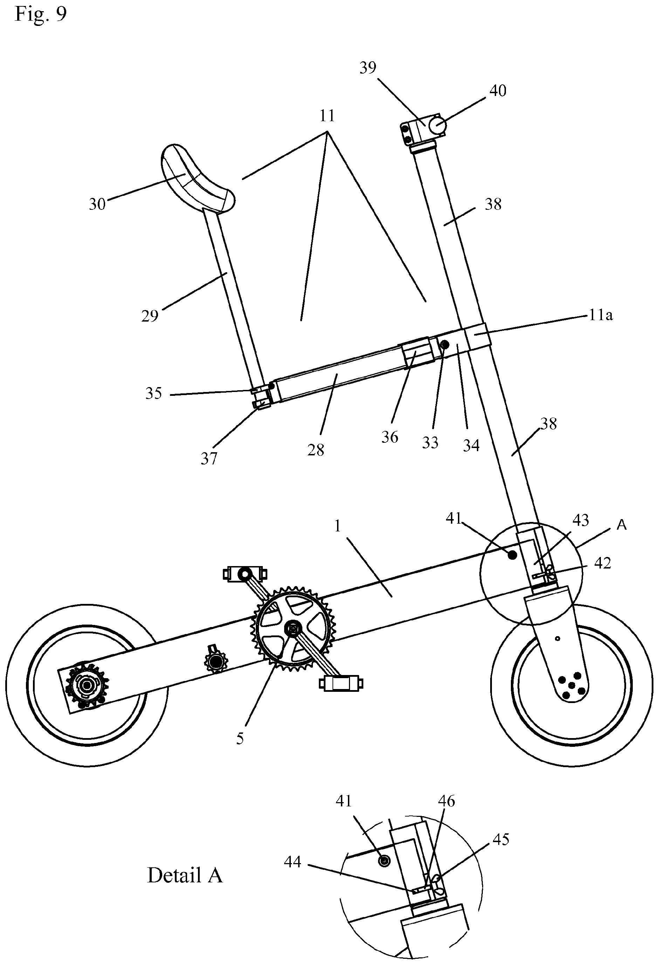

Fig. 9 zeigt die Seitenansicht einer weiteren Ausführungsform des Fahrrades. Nach einem weiteren Merkmal der Erfindung ist die Fahrradsitzanordnung 11 über ein verlängertes Steuerkopfrohr 38 und drehbeweglich zum Steuerkopfrohr 38 mit dem Fahrrad verbunden.

Am oberen Ende des Steuerkopfrohres 38 verbindet ein handelsüblicher Vorbau 39 einen Lenker 40 mit dem Gabelschaft.

Nach einem weiteren Merkmal der Erfindung ist in diesem Ausführungsbeispiel das Steuerkopfrohr 38 über eine Achse 41 mit dem Rahmen 1 drehbar verbunden. Eine Schraubverbindung 42 verspannt Ausfallende 43 des Rahmens 1 mit dem Steuerkopfrohr 38. Zu diesem Zweck ist eine Rundmutter 44 in der Ausfallenden 43 drehbar gelagert und eine Flügelmutter 45 verspannt die Rundmutter 44 mit Hilfe eines Rundmutter 44 und Flügelmutter 45 verbindenden Gewindes 46.

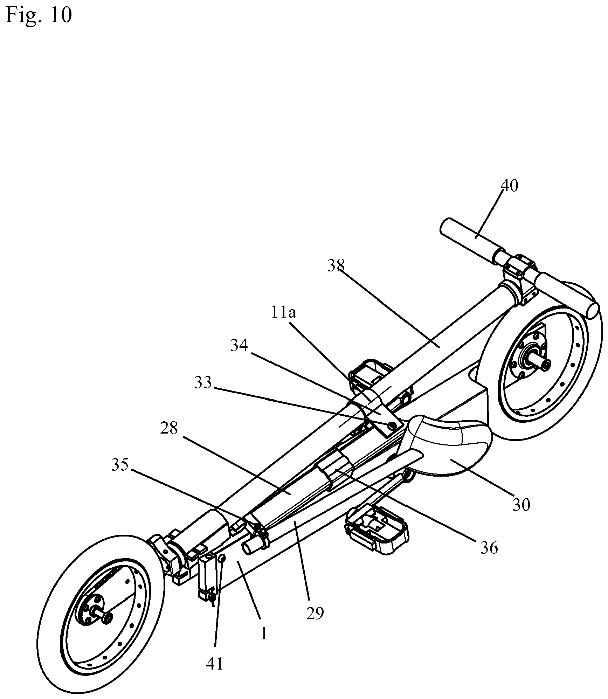

Durch diese Anordnung können das Steuerkopfrohr 38 und die Elemente der Fahrradsitzanordnung nach einem weiteren Merkmal der Erfindung längsseitig in einem Winkel von höchstens 15° zum Rahmen 1 eingeklappt werden. Den eingeklappten Zustand des Fahrrades aus Fig. 9 zeigt Fig. 10. Der besondere Vorteil dieser Ausführungsform besteht darin, dass das Fahrrad sehr schnell eingeklappt und aufgrund der über die Drehachse 11a zur Seite gedrehten Fahrradsitzanordnung 11 in der Faltbreite und der Falthöhe sehr kompakt ausgeführt werden kann.

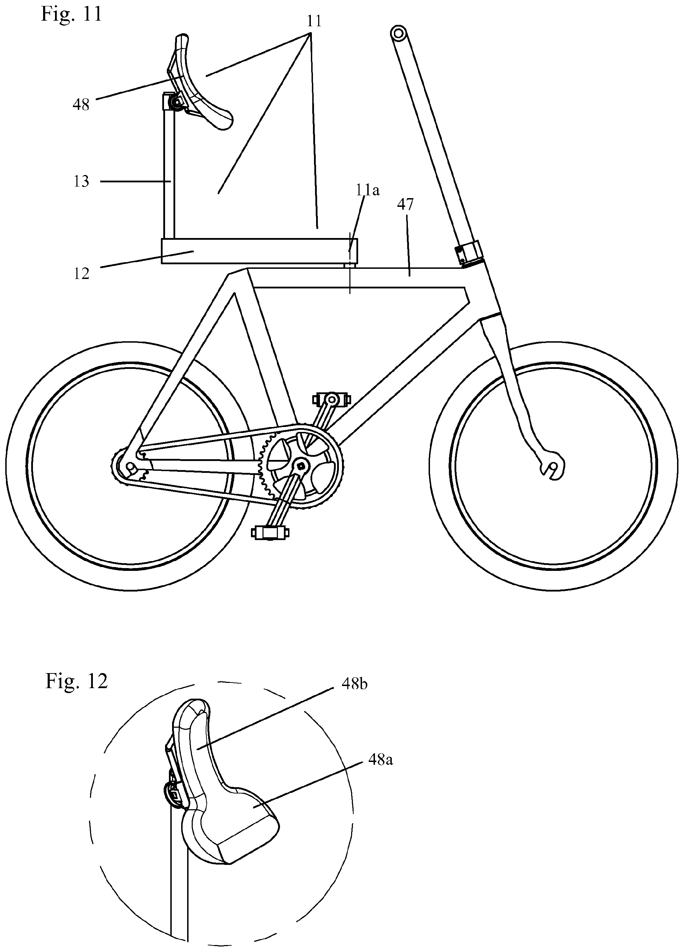

Fig. 11 zeigt die Seitenansicht einer weiteren Ausführungsform des Fahrrades. Dabei ist die Fahrradsitzanordnung 11 nach einem weiteren Merkmal der Erfindung über einen Fahrradrahmen 47 und drehbeweglich zum Fahrradrahmen 47 mit dem Fahrrad verbunden.

Fig. 12 zeigt den Fahrradsitz der Fahrradsitzanordnung aus Fig. 11 in der Ansicht. Nach einem weiteren Merkmal der Erfindung weist die Fahrradsitzanordnung 11 einen Fahrradsitz 48 mit einer breiteren unteren Sitzfläche 48a, auf die sich der Fahrer mit dem beim Fahren jeweils angezogenen Bein setzen kann und eine schmalere, obere Abstützfläche 48b, an der sich der Fahrer mit seiner Regio sacralis abstützen kann, auf. Die Vorteile dieses Fahrradsitzes 48 bestehen darin, dass zur Herstellung die Form gebenden Herstellungsverfahren handelsüblicher Fahrradsitze eingesetzt werden können oder nur geringfügig modifiziert werden müssen und dass das Fahren im Stehen mit dieser Form und Anordnung des Fahrradsitzes 48 besonders bequem empfunden wird.

Auch sind Ausführungsformen von der Erfindung umfasst, bei denen der Fahrradsitz lediglich als nach oben gerichteter Stab ausgeführt ist, wobei dann nur der Steiß und/oder die Regio sacralis des Fahrers abgestützt wird.

Wesentlich bei allen Ausführungsformen ist, dass die Drehachse 11a der Fahrradsitzanordnung 11 in Fahrtrichtung gesehen vor der Sitzfläche des Fahrradsitzes 14, 30, 48 und idealerweise vor dem Tretlager 5 angeordnet ist, wodurch der beschriebene abstützende Effekt für die aufrechte Fahrweise erst erreicht wird.

## Patentansprüche

1. Fahrrad,
enthaltend:
- einen Fahrradrahmen (1) mit einem Steuerkopfrohr (7, 38),
- ein Vorderrad (2), das drehbeweglich mit einer zum Steuerkopfrohr (7, 38) drehbeweglich gelagerten Vorderradgabel (8) verbunden ist, wobei die Vorderradgabel (8) entweder nur eine oder wenigstens zwei Gabelscheiden aufweist,
- ein Hinterrad (3),
- einen Lenker (10, 27, 40) zur Steuerung des Vorderrades (2),
- einen Fahrradantrieb zum Antrieb des Hinterrades, enthaltend ein Tretlager (5) und zwei Pedale (4), die zum Fahrradantrieb vom Fahrer wechselseitig nach unten getreten werden, wobei durch die Tretbewegung der einen Pedale (4) nach unten gleichzeitig die andere Pedale wieder nach oben bewegt wird,
wobei eine Fahrradsitzanordnung (11) des Fahrers, enthaltend einen Fahrradsitz (14, 30, 48) des Fahrers, über eine Drehachse (11a) drehbeweglich zum Fahrrad mit dem Fahrrad verbunden ist und wobei die Drehachse der Fahrradsitzanordnung (11) in Fahrtrichtung gesehen vor der Sitzfläche des Fahrradsitzes (14, 30, 48) angeordnet ist und wobei die Drehachse (11a) der Fahrradsitzanordnung (11) in Fahrtrichtung gesehen vor der Achse des Tretlagers (5) angeordnet ist und wobei die Sitzfläche des Fahrradsitzes (14, 30, 48) in Fahrtrichtung gesehen hinter der Achse des Tretlagers (5) angeordnet ist,
**dadurch gekennzeichnet, dass** im fahrbereiten Zustand des Fahrrades oder beim Fahren des Fahrrades die Drehbewegung der Fahrradsitzanordnung (11) zu beiden Seiten der Bezugsmittelebene des Fahrrades und damit in Fahrtrichtung gesehen zur linken und zur rechten Seite hin möglich ist und die Drehbewegung der Fahrradsitzeinrichtung (11) unabhängig von der Lenkbewegung des Fahrrades ist.

2. Fahrrad nach Anspruch 1, **dadurch gekennzeichnet, dass** der Fahrradrahmen ein Klappgelenk (20) aufweist, das ein vorderes Rahmenteil (21) und ein hinteres Rahmenteil (22) drehbar miteinander verbindet, wobei die Klappachse etwa mittig zwischen der Vorderradachse und der Hinterradachse und etwa orthogonal zur Grundebene angeordnet ist und das Hinterrad (3) und das Vorderrad (2) im eingeklappten Zustand seitlich gesehen weitgehend deckungsgleich hintereinander Legen.

3. Fahrrad nach einem der Ansprüche 1 oder 2, **dadurch gekennzeichnet, dass** im zusammengeklappten Zustand des Fahrrades das hintere Rahmenteil (22), das vordere Rahmenteil (21) und die Vorderradgabel (8) seitlich gesehen die Seiten eines Dreiecks bilden.

4. Fahrrad nach einem der Ansprüche 1 bis 3, **dadurch gekennzeichnet, dass** oberhalb des Steuerkopfrohres (7, 38) ein eine ein- oder mehrteilige Lenksäule (25, 26) und den Lenker (27) einklappendes Klappgelenk (23) angeordnet ist.

5. Fahrrad nach einem der Ansprüche 1 bis 4, **dadurch gekennzeichnet, dass** die Lenksäule (25, 26) eine untere Lenksäule (25) und eine obere Lenksäule (26) aufweist, die im zusammengeklappten Zustand des Fahrrades seitlich neben das Vorderrad (2) eingeklappt sind.

6. Fahrrad nach einem der Ansprüche 1 bis 5, **dadurch gekennzeichnet, dass** die Summe aus der Länge, der Breite und der Tiefe des Faltmaßes des zusammengeklappten Fahrrades höchstens 115 cm beträgt.

7. Fahrrad nach einem der Ansprüche 1 bis 6, **dadurch gekennzeichnet, dass** die Fahrradsitzanordnung (11) über die Lenksäule (9; 25, 26) und drehbeweglich zur Lenksäule (9; 25, 26) mit dem Fahrrad verbunden ist.

8. Fahrrad nach Anspruch 7, **dadurch gekennzeichnet, dass** die Lenksäule (9; 25, 26) zwischen dem Steuerkopfrohr (7, 38) und der Drehachse (11a) der Fahrradsitzanordnung (11) so dimensioniert ist, dass durch das von dem Gewicht des Fahrers über den Fahrradsitz (14, 30) auf die Lenksäule (9; 25, 26) ausgeübte Biegemoment die Lenkbewegung erschwert wird.

9. Fahrrad nach Anspruch 7 oder 8, **dadurch gekennzeichnet, dass** die Drehachse (11a) der Fahrradsitzanordnung (11) in Fahrtrichtung gesehen hinter der Lenksäule (9; 25, 26) angeordnet ist.

10. Fahrrad nach einem der Ansprüche 1 bis 5, **dadurch gekennzeichnet, dass** die Fahrradsitzanordnung (11) über das Steuerkopfrohr (7, 38) und drehbeweglich zum Steuerkopfrohr (7, 38) mit dem Fahrrad verbunden ist.

11. Fahrrad nach Anspruch 10, **dadurch gekennzeichnet, dass** zwischen dem Steuerkopfrohr (7, 38) und dem Tretlager (5) ein das Steuerkopfrohr (7, 38) und den Lenker (40) über eine Achse (41) einklappendes Klappgelenk angeordnet ist.

12. Fahrrad nach einem der Ansprüche 1 bis 11, **dadurch gekennzeichnet, dass** die Fahrradsitzanordnung (11) ein Rahmenteil (28), eine Sattelstütze (29) und einen Fahrradsitz (30) enthält, die im zusammengeklappten Zustand des Fahrrades seitlich neben die Lenksäule (25, 26) und/oder neben das Steuerkopfrohr (7, 38) eingeklappt sind.

13. Fahrrad nach einem der Ansprüche 1 bis 5, **dadurch gekennzeichnet, dass** die Fahrradsitzanordnung (11) über den Fahrradrahmen (47) und drehbeweglich zum Fahrradrahmen (47) mit dem Fahrrad verbunden ist.

14. Fahrrad nach einem der Ansprüche 1 bis 13, **dadurch gekennzeichnet, dass** die Drehachse (11a) der Fahrradsitzanordnung (11) in Fahrtrichtung gesehen wenigstens 10 cm vor der Sitzfläche des Fahrradsitzes (14, 30, 48) angeordnet ist.

15. Fahrrad nach einem der Ansprüche 1 bis 14, **dadurch gekennzeichnet, dass** der horizontale Anteil des Abstandes zwischen dem Lenker (10, 27, 40) und dem Fahrradsitz (14, 30, 48) wenigstens 30 cm und höchstens 60 cm beträgt, womit der Fahrer mit den Händen einen nach vorn gerichteten Druck auf den Lenker (10, 27, 40) ausüben kann und sich nach hinten gerichtet am Fahrradsitz (14, 30, 48) abstützen kann.

16. Fahrrad nach einem der Ansprüche 1 bis 15, **dadurch gekennzeichnet, dass** der horizontale Anteil des Abstandes zwischen der Drehachse (11a) der Fahrradsitzanordnung (11) und dem Fahrradsitz (14, 30, 48) wenigstens 30 cm und höchstens 60 cm beträgt, womit eine ausreichend große Drehbewegung der Fahrradsitzanordnung (11) zur Abstützung der Hüftseite des nicht nach unten tretenden Beines (32) des Fahrers erreicht wird.

17. Fahrrad nach einem der Ansprüche 1 bis 16, **dadurch gekennzeichnet, dass** der Fahrradsitz ein nach oben gerichteter Stab ist, an dem der Fahrer sich mit seiner Regio sacralis und/oder mit seinem Steiß abstützt.

18. Fahrrad nach einem der Ansprüche 1 bis 16, **dadurch gekennzeichnet, dass** der Fahrradsitz (48) eine untere Sitzfläche (48a) und eine obere Sitzfläche (48b) aufweist, wobei die untere Sitzfläche (48a) breiter ist als die obere Sitzfläche (48b).

## Claims

1. Bicycle,
comprising:
- a bicycle frame (1) having a head tube (7, 38),
- a front wheel (2), which is rotatably connected to a front fork (8), this rotatably mounted to the head tube (7,38), wherein the front fork (8) comprises either only one or at least two fork blades,
- a rear wheel (3),
- a handlebar (10, 27, 40) for steering the front wheel (2),
- a bicycle drive for driving the rear wheel, comprising a bottom bracket (5) and two pedals (4), which are pedaled downwards alternatingly by the cyclist, wherein pedaling down with one pedal (4) moves up the other pedal simultaneously,
- a bicycle seat assembly (11) for the cyclist, comprising a bicycle seat (14, 30, 48) for the cyclist, wherein the bicycle seat assembly (11) is rotatably connected to the bicycle via an axis of rotation (11a) and wherein the axis of rotation of the bicycle seat assembly (11), seen in the driving direction, is arranged in front of the seating surface of the bicycle seat (14, 30, 48) and wherein the axis of rotation (11a) of the bicycle seat assembly (11) is arranged in front of the axle of the bottom bracket (5), seen in the driving direction, and wherein the seating surface of the bicycle seat (14, 30, 48) is arranged behind the axle of the bottom bracket (5), seen in the driving direction
**characterized in that**
the rotation of the bicycle seat assembly (11) is possible to both sides of the reference center plane of the bicycle, hence, seen in the driving direction, to the left and to the right side of the bicycle, and is independent of the steering movement.

2. Bicycle according to claim 1, **characterized in that** the bicycle frame comprises a folding hinge (20) pivotally connecting a front frame part (21) and a rear frame part (22) with each other, wherein the pivot axis is arranged approximately midway between the front axle and the rear axle and approximately orthogonal to the ground plane and wherein the rear wheel (3) and the front wheel (2), seen laterally in the folded state, are arranged one behind the other largely congruently.

3. Bicycle according to one of claims 1 or 2, **characterized in that** in the folded state of the bicycle the rear frame part (22), the front frame part (21) and the front wheel fork (8), seen laterally, form the sides of a triangle.

4. Bicycle according to one of claims 1 to 3, **characterized in that** above the head tube (7, 38) a folding hinge (23) is arranged, that folds a mono- or multi-part steering column (25, 26) and the handlebar (27).

5. Bicycle according to one of claims 1 to 4, **characterized in that** the steering column (25, 26) comprises a lower steering column (25) and an upper steering column (26), which are folded laterally beside the front wheel (2) in the folded state of the bicycle.

6. Bicycle according to one of claims 1 to 5, **characterized in that** the sum of the length, the width and the depth of the folding size of the folded bicycle is at most 115 cm.

7. Bicycle according to one of claims 1 to 6, **characterized in that** the bicycle seat assembly (11) is rotatably connected to the bicycle via the steering column (9; 25, 26).

8. Bicycle according to one of claims 1 to 7, **characterized in that** between the head tube (7, 38) and the axis of rotation (11a) of the bicycle seat assembly (11), the steering column (9; 25, 26) is dimensioned so as to make the steering movement more difficult due to the bending moment triggered by the weight of the cyclist and acting on the steering column (9; 25, 26) via the bicycle seat (14, 30).

9. A bicycle according to claim 7 or 8, **characterized in that** the axis of rotation (11a) of the bicycle seat assembly (11) is arranged behind the steering column (9; 25, 26), seen in the driving direction.

10. Bicycle according to one of claims 1 to 5, **characterized in that** the bicycle seat assembly (11) is connected to the bicycle via the head tube (7, 38) and rotatably to the head tube (7, 38).

11. Bicycle according to claim 10, **characterized in that** a folding hinge is arranged between the head tube (7, 38) and the bottom bracket (5), folding the head tube (7, 38) and the handlebar (40) via an axis (41).

12. Bicycle according to one of claims 1 to 11, **characterized in that** the bicycle seat assembly (11) comprises a frame element (28), a seat post (29) and a bicycle seat (30), that are folded laterally beside the steering column (25, 26) and / or beside the head tube (7, 38) in the folded state of the bicycle.

13. Bicycle according to one of claims 1 to 5, **characterized in that** the bicycle seat assembly (11) is connected to the bicycle via the bicycle frame (47) and rotatably to the bicycle frame (47).

14. Bicycle according to one of claims 1 to 13, **characterized in that** the axis of rotation (11a) of the bicycle seat assembly (11) is arranged at least 10 cm in front of the seating surface of the bicycle seat (14, 30, 48), seen in the driving direction.

15. Bicycle according to one of claims 1 to 14, **characterized in that** the horizontal component of the distance between the handlebar (10, 27, 40) and the bicycle seat (14, 30, 48) is at least 30 cm and at most 60 cm, whereby the cyclist is able to exert a forward-facing pressure on the handlebar (10, 27, 40) with the hands and can be supported backwards to the bicycle seat (14, 30, 48).

16. Bicycle according to one of claims 1 to 15, **characterized in that** the horizontal component of the distance between the axis of rotation (11a) of the bicycle seat assembly (11) and the bicycle seat (14, 30, 48) is at least 30 cm and at most 60 cm, thus a sufficient rotation of the bicycle seat assembly (11) for supporting the hip side of the cyclist's leg (32), not pedaling downward, is achieved.

17. Bicycle according to one of claims 1 to 16, **characterized in that** the bicycle seat is an upwardly pointing rod, to which the cyclist's Regio sacralis and / or coccyx is supported.

18. Bicycle according to one of claims 1 to 16, **characterized in that** the bicycle seat (48) comprises a lower seating surface (48a) and an upper seating surface (48b), wherein the lower seating surface (48a) is wider than the upper seating surface (48b).

## Revendications

1. Bicyclette,
comprenant :
- un cadre de bicyclette (1) muni d'un tube de direction (7, 38),
- une roue avant (2), qui est reliée mobile en rotation à une fourche (8) de roue avant logée de manière mobile en rotation vers le tube de direction (7, 38), et la fourche (8) de roue avant présentant soit uniquement un, soit au moins deux, fourreau(x),
- une roue arrière (3),
- un guidon (10, 27, 40) pour la direction de la roue avant (2),
- un entraînement de bicyclette pour l'entraînement de la roue arrière, comprenant un ensemble pédalier (5) et deux pédales (4), sur lesquelles le cycliste appuie réciproquement vers le bas pour l'entraînement de bicyclette, le déplacement d'une des pédales (4) vers le bas redéplaçant en même temps l'autre pédale vers le haut,
dans laquelle un agencement de siège de bicyclette (11) du cycliste, comprenant un siège de bicyclette (14, 30, 48) du cycliste, est relié à la bicyclette par l'intermédiaire d'un axe de rotation (11a) de manière mobile en rotation vers la bicyclette et dans laquelle l'axe de rotation de l'agencement de siège de bicyclette (11) est disposé, en vue dans la direction de conduite, en amont de la surface d'assise du siège de bicyclette (14, 30, 48) et dans laquelle l'axe de rotation (11a) de l'agencement de siège de bicyclette (11), en vue dans la direction de conduite, est disposé en amont de l'axe de l'ensemble pédalier (5) et dans laquelle la surface d'assise du siège de bicyclette (14, 30, 48) est disposée, en vue dans la direction de conduite, en aval de l'axe de l'ensemble pédalier (5),
**caractérisée en ce que**, à l'état prêt à rouler de la bicyclette ou lors de la conduite de la bicyclette, le mouvement de rotation de l'agencement de siège de bicyclette (11) est possible des deux côtés du plan central de référence de la bicyclette et donc, en vue dans la direction de conduite, vers le côté à gauche et vers le côté à droite et le mouvement de rotation de l'agencement de siège de bicyclette (11) est indépendant du mouvement de direction de la bicyclette.

2. Bicyclette selon la revendication 1, **caractérisée en ce que** le cadre de bicyclette présente une articulation pliante (20) qui relie l'un à l'autre de manière rotative un élément de cadre avant (21) et un élément de cadre arrière (22), dans laquelle l'axe pliant est disposé approximativement centralement entre l'axe de la roue avant et l'axe de la roue arrière et approximativement orthogonalement au plan de base et la roue arrière (3) et la roue avant (2), en vue de côté, sont disposées largement de manière à coïncider l'une derrière l'autre à l'état replié.

3. Bicyclette selon l'une quelconque des revendications 1 ou 2, **caractérisée en ce que**, à l'état replié de la bicyclette, l'élément de cadre arrière (22), l'élément de cadre avant (21) et la fourche (8) de roue avant, en vue de côté, forment les côtés d'un triangle.

4. Bicyclette selon l'une quelconque des revendications 1 à 3, **caractérisée en ce que**, au-dessus du tube de direction (7, 38), est disposée une articulation pliante (23) repliant une colonne de direction (25, 26) formée d'une ou de plusieurs parties et le guidon (27).

5. Bicyclette selon l'une quelconque des revendications 1 à 4, **caractérisée en ce que** la colonne de direction (25, 26) présente une colonne de direction inférieure (25) et une colonne de direction supérieure (26) qui, à l'état replié de la bicyclette, sont repliées latéralement à côté de la roue avant (2).

6. Bicyclette selon l'une quelconque des revendications 1 à 5, **caractérisée en ce que** la somme de la longueur, de la largeur et de la profondeur des dimensions pliées de la bicyclette repliée est au maximum de 115 cm.

7. Bicyclette selon l'une quelconque des revendications 1 à 6, **caractérisée en ce que** l'agencement de siège de bicyclette (11) est relié à la bicyclette par l'intermédiaire de la colonne de direction (9 ; 25, 26) et de manière mobile en rotation par rapport à la colonne de direction (9 ; 25, 26).

8. Bicyclette selon la revendication 7, **caractérisée en ce que** la colonne de direction (9 ; 25, 26) est dimensionnée entre le tube de direction (7, 38) et l'axe de rotation (11a) de l'agencement de siège de bicyclette (11) de telle sorte que le moment de flexion exercé sur la colonne de direction (9 ; 25, 26) par le poids du cycliste par l'intermédiaire du siège de bicyclette (14, 30) entrave le mouvement de direction.

9. Bicyclette selon la revendication 7 ou 8, **caractérisée en ce que** l'axe de rotation (11a) de l'agencement de siège de bicyclette (11), en vue dans la direction de conduite, est disposé en aval de la colonne de direction (9 ; 25, 26).

10. Bicyclette selon l'une quelconque des revendications 1 à 5, **caractérisée en ce que** l'agencement de siège de bicyclette (11) est relié à la bicyclette par l'intermédiaire du tube de direction (7, 38) et de manière mobile en rotation par rapport au tube de direction (7, 38).

11. Bicyclette selon la revendication 10, **caractérisée en ce que**, entre le tube de direction (7, 38) et l'ensemble pédalier (5), est disposée une articulation pliante repliant le tube de direction (7, 38) et le guidon (40) sur un axe (41).

12. Bicyclette selon l'une quelconque des revendications 1 à 11, **caractérisée en ce que** l'agencement de siège de bicyclette (11) contient un élément de cadre (28), une tige de selle (29) et un siège de bicyclette (30), qui, à l'état replié de la bicyclette, sont repliés latéralement à côté de la colonne de direction (25, 26) et/ou à côté du tube de direction (7, 38).

13. Bicyclette selon l'une quelconque des revendications 1 à 5, **caractérisée en ce que** l'agencement de siège de bicyclette (11) est relié à la bicyclette par l'intermédiaire du cadre de bicyclette (47) et de manière mobile en rotation par rapport au cadre de bicyclette (47).

14. Bicyclette selon l'une quelconque des revendications 1 à 13, **caractérisée en ce que** l'axe de rotation (11a) de l'agencement de siège de bicyclette (11), en vue dans la direction de conduite, est disposé au moins 10 cm en amont de la surface d'assise du siège de bicyclette (14, 30, 48).

15. Bicyclette selon l'une quelconque des revendications 1 à 14, **caractérisée en ce que** la partie horizontale de l'écart entre le guidon (10, 27, 40) et le siège de bicyclette (14, 30, 48) est au moins de 30 cm et au plus de 60 cm, ce qui permet au cycliste d'exercer avec les mains une pression dirigée vers l'avant sur le guidon (10, 27, 40) et de s'appuyer sur le siège de bicyclette (14, 30, 48) dirigé vers l'arrière.

16. Bicyclette selon l'une quelconque des revendications 1 à 15, **caractérisée en ce que** la partie horizontale de l'écart entre l'axe de rotation (11a) de l'agencement de siège de bicyclette (11) et le siège de bicyclette (14, 30, 48) est au moins de 30 cm et au plus de 60 cm, ce qui permet d'obtenir un mouvement de rotation de l'agencement de siège de bicyclette (11) suffisamment grand pour soutenir la hanche du cycliste du côté de la jambe (32) qui ne va pas vers le bas.

17. Bicyclette selon l'une quelconque des revendications 1 à 16, **caractérisée en ce que** le siège de bicyclette est une barre dirigée vers le haut, contre laquelle le cycliste s'appuie avec son sacrum et/ou son coccyx.

18. Bicyclette selon l'une quelconque des revendications 1 à 16, **caractérisée en ce que** le siège de bicyclette (48) présente une surface d'assise inférieure (48a) et une surface d'assise supérieure (48b), dans laquelle la surface d'assise inférieure (48a) est plus large que la surface d'assise supérieure (48b).
